# FASCICULE DE BREVET EUROPEEN

(11) **EP 0 787 984 B1**
(45) Date de publication et mention de la délivrance du brevet: **07.04.1999**
(21) Numéro de dépôt: 97100590.5
(22) Date de dépôt: 16.01.1997
(51) Int. Cl.: G01N 27/30

(54) **Capteur électrochimique sans calibration**
Elektrochemischer Sensor ohne Eichung
Electrochemical sensor without calibration

(30) Priorité: 31.01.1996 FR 9601140
(43) Date de publication de la demande: 06.08.1997
(73) Titulaire: ASULAB S.A., CH-2501 Bienne (CH)
(72) Inventeur: Frankel, Erik Jan, 2000 Neuchâtel (CH); Gagnebin, Eric, 2074 Marin (CH); Randin, Jean-Paul, 2016 Cortaillod (CH)
(74) Mandataire: Thérond, Gérard Raymond

(56) Documents cités:
- EP-A- 0 351 516
- EP-A- 0 609 760
- US-A- 5 378 628
- US-A- 5 393 903

## Description

La présente invention a pour objet un capteur électrochimique, destiné à un usage unique pour mesurer la concentration d'un composant dans un échantillon d'une solution, d'un fluide ou d'un effluent au moyen d'un appareil de mesure électronique portable, sans qu'il soit nécessaire de mettre préalablement en oeuvre un moyen de calibration qui soit fonction du lot de fabrication dudit capteur.

L'invention concerne plus particulièrement un tel capteur utilisé pour le suivi médical d'un patient en traitement ambulatoire, nécessitant la mesure de la concentration d'un composant dans un fluide biologique corporel, tel que le taux de glucose dans le sang d'un individu souffrant du diabète.

Au cours des dix dernières années, les capteurs électrochimiques jetables destinés à des mesures biologiques ont connu un développement considérable. De façon générale, ils sont constitués par un support isolant de petites dimensions, supportant au moins deux électrodes électriquement séparées et connectables à un appareil de mesure, l'électrode de mesure étant en outre revêtue d'un réactif spécifique du composant dont on veut mesurer la concentration. La mesure est effectuée en déposant l'échantillon à analyser sur une zone repérée par une ouverture pratiquée dans un film de recouvrement laissant apparaître les électrodes et des portions du substrat isolant. Cette mesure s s'effectue de façon indirecte par l'exploitation d'un signal électrique engendré par l'interaction entre le réactif et le composant dont on veut mesurer la concentration. Entre autres paramètres, l'intensité de ce signal est fonction de la surface des électrodes.

Cette exploitation du signal électrique consiste généralement en des mesures conductométriques, voltamétriques, ampérométriques, coulométriques, ou polarographiques permettant d'étalonner l'appareil de mesure électronique en fonction de l'intensité du signal électrique reçu de façon à afficher directement sur un écran la concentration du composant selon un mode déterminé (mg/dl, mmol/l). Pour que la valeur affichée corresponde réellement à la concentration présente dans l'échantillon, il convient que l'interaction entre le composant et le réactif s'effectue rigoureusement de la même façon, c'est-à-dire que le signal électrique produit soit identique quel que soit le capteur utilisé. Or, pour que ces capteurs puissent être jetables, ils doivent être bon marché, et pour cela ils ne peuvent être fabriqués qu'en série par lots. Quelque soit le soin apporté à la fabrication de ces capteurs, tant au niveau de la construction qu'au niveau du dosage des différents composants du réactif, on observe inévitablement de petites variations d'un lot de fabrication à l'autre, variation préjudiciable à la fiabilité desdits capteurs.

En d'autres termes, à chaque lot de fabrication correspond une courbe d'étalonnage spécifique pouvant être choisie parmi des courbes d'étalonnage mises en mémoire dans l'appareil de mesure. A cet effet, les conditionnements de capteurs actuellement mis sur le marché comportent, soit un numéro de code devant être introduit dans l'appareil au moyen d'un clavier numérique, soit un moyen de calibration devant être mis en place dans l'appareil avant la première mesure. Les moyens de calibration ou d'introduction de données peuvent être constitués par un capteur-test ayant une résistance calibrée, une barrette pourvue d'un code-barre pouvant être lu par l'appareil, voire une puce électronique.

Outre le fait que des risques d'erreurs ne sont pas exclus, par exemple en omettant de procéder à une nouvelle calibration lorsqu'on entame un conditionnement contenant des capteurs provenant d'un lot différent du précédent, les moyens de calibrations actuellement nécessaires augmentent sensiblement le coût de chaque capteur, c'est-à-dire finalement le coût d'un traitement médical effectué sous contrôle des mesures effectuées avec un capteur, par exemple avec un capteur de glucose pour les personnes souffrant de diabète.

La présente invention vise à remédier aux inconvénients de l'art antérieur en fournissant un capteur fabriqué en série, mais ne nécessitant pas l'utilisation d'un moyen de calibration, quel que soit le lot de fabrication duquel provient ledit capteur, pour autant que le délai limite d'utilisation soit respecté.

A cet effet l'invention a pour objet un capteur électrochimique, servant à mesurer la concentration d'un composant dans une solution, en forme d'une languette de petites dimensions comprenant un substrat allongé mince isolant supportant de part et d'autre de sa ligne médiane deux bandes conductrices de largeur L et L', dont les arêtes en regard sont isolées électriquement l'une de l'autre par un espace de largeur δ, les largeurs L, L' et δ étant mesurées perpendiculairement à la ligne médiane, ledit substrat et lesdites bandes conductrices étant recouverts d'un film de couverture isolant, dans lequel sont découpées à une extrémité une fenêtre de connexion, et près de l'autre extrémité, au moins une fenêtre de mesure formée de deux ouvertures séparées par une portion dudit film de couverture, chaque ouverture délimitant sur une portion de chaque bande conductrice les surfaces utiles d'une électrode de travail et d'une électrode de référence, caractérisé en ce que chaque ouverture a en tout point des dimensions mesurées perpendiculairement à la ligne médiane telles que le bord le plus éloigné de l'arête de la portion de bande formant l'électrode que ladite ouverture ne découvre pas est située à une distance comprise entre L + δ et δ, respectivement L' + δ et δ, et le bord le plus proche à une distance supérieure à δ. Il est à noter qu'un capteur conforme au préambule de la revendication 1 est divulgué dans le document EP-A-0 609 760.

Selon un mode de réalisation préféré, en particulier compte tenu d'une fabrication en série par lots, le capteur électrochimique présente une symétrie axiale le long de sa ligne médiane. Les collecteurs de courant ont alors la même largeur et les surfaces utiles des électrodes sont identiques.

Bien que les ouvertures de la fenêtre de mesure puissent avoir une forme quelconque, on préférera une forme géométrique simple notamment en raison des contraintes de fabrication en série et de la recherche d'un coût de production minimum. Selon un mode de réalisation préféré, chaque ouverture a la forme d'un secteur circulaire de même surface et la portion du film de couverture destinée à séparer les ouvertures a la forme d'une étroite bande parallèle aux bandes conductrices, de largeur supérieure à δ, chacun de ses bords recouvrant une étroite portion des deux bandes conductrices.

Les fenêtres de connexion et de mesure peuvent être découpées dans le film de couverture selon des techniques connues, mais selon un mode de réalisation préféré, ces fenêtres sont découpées par étampage dudit film. Les essais effectués ont en effet montré que l'étampage était la technique qui permettait d'obtenir la reproductibilité la plus parfaite et donc la plus grande précision dans les surfaces utiles des électrodes, quel que soit le lot de fabrication.

Dans une application préférée le capteur électrochimique selon l'invention permet le dosage d'un composant dans une solution, en comportant en outre sur l'électrode de travail un réactif contenant au moins une enzyme spécifique du composant dont on veut mesurer la concentration et un médiateur chimique permettant de transférer les électrons.

A titre de médiateur, on peut choisir un de ceux décrits dans le brevet US 5 393 903, à savoir des complexes mono, bis ou tris 2,2'-bipyridine substituée de ruthénium, d'osmium ou de vanadium, ayant au moins un des ligands bipyridine substitué par au moins un groupe donneur d'électrons. De tels médiateurs possèdent en effet les propriétés requises quant à la stabilité et à la vitesse de médiation tout en n'ayant pas, ou excessivement peu, d'influence sur la déviation d'une mesure en fonction du lot de fabrication du capteur utilisé.

Dans l'application choisie à titre d'exemple, à savoir le dosage du glucose dans le sang d'un patient, l'enzyme spécifique incorporée dans le réactif sera alors la glucose oxydase (GOD).

D'autres caractéristiques et avantages de l'invention apparaîtront mieux à la lecture de la description détaillée qui suit, concernant à titre d'exemple illustratif et non limitatif un capteur électrochimique ne comportant qu'une fenêtre de mesure, cette description étant faite en référence aux dessins annexés dans lesquels
- la figure 1 représente une vue de dessus agrandie d'un capteur selon l'invention, et
- la figure 2 représente le capteur de la figure 1 selon la coupe II-II, à une échelle encore plus grande, les dimensions transversales ayant été exagérées pour une meilleure compréhension.

Bien entendu, les figures représentent le capteur dans sa forme prête à l'usage, c'est-à-dire après découpage de son lot de fabrication, qui peut être soit une bande, soit une feuille.

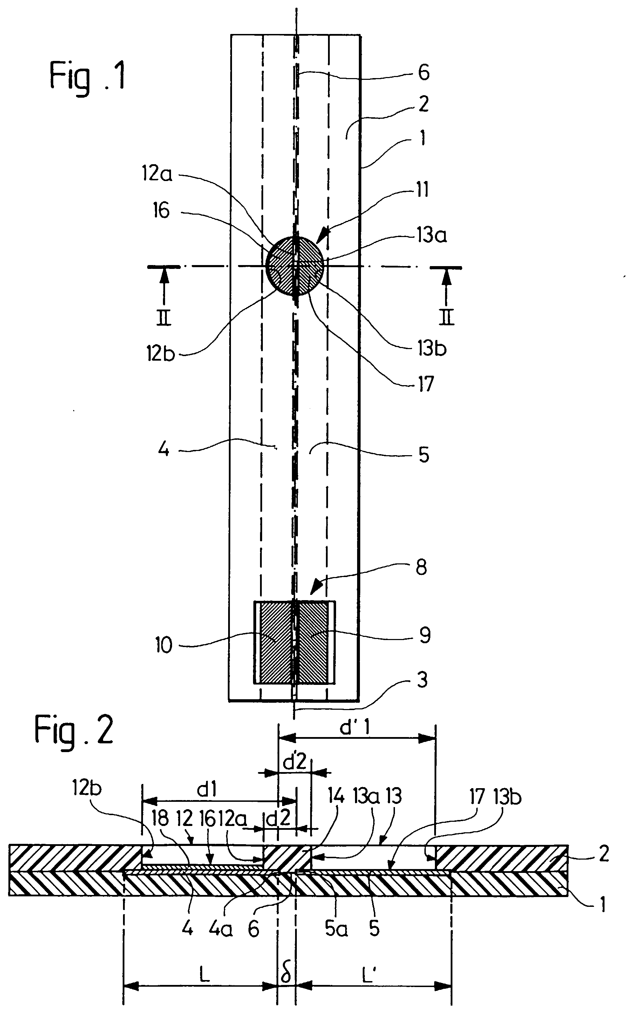

En se référant aux figures 1 et 2, on a représenté un capteur pour mesurer le taux de glucose dans le sang, c'est-à-dire un capteur électrochimique comportant en outre un réactif 18 dont la nature sera précisée plus loin. Ce capteur a la forme d'une languette mince de petites dimensions d'une épaisseur totale comprise entre 0,25 et 0,75 mm, de préférence environ 0,5 mm; la largeur est comprise entre 6 et 12 mm, de préférence environ 8 mm; dans l'exemple choisi ne comportant qu'une seule fenêtre de mesure 11, sa longueur est de l'ordre de 40 mm.

En se référant plus particulièrement à la coupe de la figure 2, le capteur comprend un substrat 1 mince isolant, réalisé dans un matériau souple mais rigide connu de l'homme de l'art, tel que le PET.

Le substrat 1 supporte deux bandes conductrices 4, 5 dont les arêtes en regard (4a, 5a) sont isolées électriquement par un espace de largeur δ. Dans l'exemple représenté, ces bandes 4, 5 sont sensiblement de même largeur L = L' . On a en effet constaté, quelle que soit la qualité du matériau conducteur utilisé, et même dans le cas d'un film isolant métallisé, qu'il peut exister de faibles variations locales de largeur qui se traduisent dans les capteurs de l'art antérieur, dans lesquels les bandes conductrices traversent la fenêtre de mesure, par des variations significatives de la surface utile des électrodes, ce qui a pour conséquence un manque de reproductibilité dans les mesures. Lorsque les deux bandes conductrices 4, 5 sont constituées par un film isolant métallisé, elles sont laminées sur le substrat 1 de façon symétrique, parallèlement à la ligne médiane du capteur, en laissant entre elles un étroit espace d'isolation 6 ayant la forme d'une bande de largeur δ.

L'ensemble ainsi constitué par le substrat 1 et par les bandes conductrices 4, 5 est recouvert par un film de couverture 2 mince isolant dans lequel sont découpées deux fenêtres 8 et 11, près de chaque extrémité. La fenêtre 8 est une fenêtre de connexion laissant apparaître des portions de bandes conductrices 4, 5 formant les contacts 9, 10 qui permettront de connecter le capteur à un appareil électronique portable. Comme on le voit sur la figure 1, les portions de bandes conductrices traversent la fenêtre 8 et laissent apparaître une petite bande du substrat 1 près de leurs bords externes. La fenêtre 11 est une fenêtre de mesure comprenant deux ouvertures 12, 13 symétriques par rapport à l'axe 3 du capteur, séparées par une étroite portion 14 du film de couverture en forme de bande. Les ouvertures 12, 13 délimitent sur des portions de bandes conductrices 4, 5 la surface de chaque électrode 16, 17, les dimensions de chaque ouverture 12, 13 étant telle qu'aucune portion du substrat 1 n'apparaisse. A cet effet, pour l'ouverture 12, son bord 12b le plus éloigné de l'arête 5a de la portion de bande 5 formant l'électrode 17 que ladite ouverture 12 ne découvre pas est à une distance d₁ telle que L + δ > d₁ > δ et son bord le plus proche 12a de ladite arête 5a est situé à une distance d₂ telle que d₂ > δ. De façon analogue, le bord 13b de l'ouverture 13 est à une distance d'₁ de l'arête 4a de la portion de bande 4 formant l'électrode 16 que ladite ouverture 13 ne découvre pas telle que L' + δ > d'₁ > δ , et le bord 13a le plus proche à une distance d'₂ telle que d'₂ > δ. Toutes les distances d₁, d₂, d'₁ et d'₂, sont mesurées perpendiculairement à la ligne médiane 3.

Dans la configuration symétrique représentée, L = L', d₁ = d'₁ et d₂ = d'₂ et les ouvertures ont la forme de secteurs circulaires séparés par une bande 14 de largeur supérieure à δ, qui recouvre les bords en regard 4a, 5a des deux portions de bandes 4, 5 formant les électrodes 16, 17, sur une largeur sensiblement égale à la largeur de recouvrement près des bords les plus éloignés de chaque ouverture. Compte tenu des petites dimensions du capteur, ce recouvrement sera par exemple au minimum de l'ordre de 0,10 mm sur tout le pourtour de chaque ouverture. Comme on le voit, la surface de chaque électrode est très précisément délimitée par la surface de chaque ouverture, en éliminant toute variation de surface due, soit à l'irrégularité des bords des bandes conductrices, soit aux petites variations de positionnement du film de recouvrement 2 sur le substrat 1. L'expérience a montré que la plus grande reproductibilité dans la surface des ouvertures était obtenue par étampage du film 2. Le substrat et le film de recouvrement sont maintenus solidaires par des procédés connus tels que la thermofusion des surfaces en regard, ou l'application d'une colle.

A la figure 2, on a également représenté le réactif 18 qui recouvre toute la surface utile de l'électrode de travail 16.

Dans le cas du dosage du glucose, ce réactif sera, par exemple, celui décrit dans le brevet US 5 378 628 donnant les conditions d'optimisation d'un mélange comprenant notamment la glucose oxydase (GOD) et un médiateur choisi parmi les complexes mono, bis ou tris 2,2'-bipyridine substituée de ruthénium, d'osmium ou de vanadium ayant au moins un ligand bipyridine substitué par au moins un groupe donneur d'électrons. Ce réactif qui permet en particulier de travailler dans des conditions optimales pour avoir une vitesse de diffusion élevée qui rend négligeables ou nulles les variations de réponse du capteur en fonction du lot de fabrication du réactif ou des variations de quantité déposée sur l'électrode de travail.

L'invention procure donc un capteur qui peut ainsi être présenté à l'utilisateur dans des conditionnements ne comprenant aucun moyen de calibration. Les conditionnements peuvent tout au plus comporter une date limite d'utilisation, comme cela est d'usage pour les produits de consommation, notamment dans le domaine pharmaceutique.

## Revendications

1. Capteur électrochimique, servant à mesurer la concentration d'un composant dans une solution, en forme d'une languette de petites dimensions comprenant un substrat (1) allongé mince isolant supportant de part et d'autre de sa ligne médiane (3) deux bandes conductrices (4, 5) de largeur L et L', dont les arêtes en regard (4a, 5a) sont isolées électriquement l'une de l'autre par un espace (6) de largeur δ, les largeurs L, L' et δ étant mesurées perpendiculairement à la ligne médiane (3), ledit substrat (1) et lesdites bandes conductrices (4, 5) étant recouverts d'un film de couverture (2) isolant, dans lequel sont découpées à une extrémité une fenêtre de connexion (8), et près de l'autre extrémité, au moins une fenêtre de mesure (11) formée de deux ouvertures (12, 13) séparées par une portion (14) dudit film de couverture (2), chaque ouverture délimitant sur une portion de chaque bande conductrice (4, 5) les surfaces utiles d'une électrode de travail (16) et d'une électrode de référence (17), caractérisé en ce que chaque ouverture (12, 13) a en tout point des dimensions mesurées perpendiculairement à la ligne médiane (3) telles que le bord le plus éloigné (12b, 13b) de l'arête (5a, 4a) de la portion de bande (5, 4) formant l'électrode (17, 16) que ladite ouverture (12, 13) ne découvre pas est située à une distance comprise entre L + δ et δ, respectivement L' + δ et δ, et le bord le plus proche (12a, 13a) à une distance supérieure à δ, un tel agencement procurant un capteur ne nécessitant pas de calibration.

2. Capteur électrochimique selon la revendication 1, caractérisé en ce qu'il présente une symétrie axiale par rapport à sa ligne médiane (3), les bandes conductrices (4, 5) ayant alors sur toute leur longueur sensiblement la même largeur L = L' , et les surfaces utiles des électrodes (16, 17) étant alors identiques.

3. Capteur électrochimique selon la revendication 2, caractérisé en ce que chaque ouverture (12, 13) a la forme d'un secteur circulaire et que la portion (14) séparant les deux ouvertures a la forme d'une bande parallèle aux bandes conductrices (4, 5).

4. Capteur électrochimique selon la revendication 1, caractérisé en ce que les fenêtres (8, 11) sont réalisées par étampage du film de couverture (2).

5. Capteur électrochimique selon la revendication 1, caractérisé en ce que l'électrode de travail (16) est en outre revêtue d'un réactif (18) contenant au moins une enzyme spécifique du composant présent dans la solution et un médiateur chimique susceptible de transférer les électrons.

6. Capteur électrochimique selon la revendication 5, caractérisé en ce que le médiateur est choisi parmi les complexes mono, bis ou tris 2,2'-bipyridine substituée de ruthenium, d'osmium ou de vanadium, au moins un des ligands bipyridine étant substitué par au moins un groupe donneur d'électrons.

7. Capteur électrochimique selon les revendications 5 ou 6, caractérisé en ce que l'enzyme est la glucose oxydase (GOD) pour effectuer le dosage du glucose.

## Patentansprüche

1. Elektrochemischer Sensor zum Messen der Konzentration einer Komponente in einer Lösung, in Form eines Streifens mit kleinen Abmessungen, umfassend ein isolierendes, schlankes, langgestrecktes Substrat (1), welches auf beiden Seiten seiner Mittellinie (3) zwei leitende Streifen (4, 5) der Breite L und L' trägt, deren gegenüberliegende Kanten (4a, 5a) durch einen Zwischenraum (6) der Breite δ elektrisch voneinander isoliert sind, wobei die Breiten L, L' und δ senkrecht zur Mittellinie (3) gemessen werden, wobei das Substrat (1) und die leitenden Streifen (4, 5) mit einem isolierenden Abdeckungsfilm (2) bedeckt sind, aus welchem an einem Ende ein Verbindungsfenster (8) und nahe des anderen Endes mindestens ein aus zwei durch einen Abschnitt (14) des Abdeckungsfilms (2) voneinander getrennten Öffnungen (12, 13) gebildetes Meßfenster (11) ausgeschnitten sind, wobei jede Öffnung auf einem Abschnitt jedes leitenden Streifens (4, 5) die Nutzflächen einer Arbeitselektrode (16) und einer Referenzelektrode (17) begrenzt, dadurch gekennzeichnet, daß jede Öffnung (12, 13) an allen Stellen senkrecht zur Mittellinie (3) gemessene Abmessungen so aufweist, daß der von der Kante (5a, 4a) des die Elektrode (17, 16) bildenden Abschnitts des Streifens (5, 4), der die Öffnung (12, 13) nicht bedeckt, am weitesten entfernte Rand (12b, 13b) in einer Entfernung zwischen L+δ und δ bzw. L'+δ und δ, und der nächstliegende Rand (12a, 13a) in einer Entfernung, die größer ist als δ, angebracht ist, wobei eine solche Anordnung einen Sensor schafft, der keiner Kalibration bedarf.

2. Elektrochemischer Sensor nach Anspruch 1, dadurch gekennzeichnet, daß er eine Symmetrieachse bezogen auf seine Mittellinie (3) aufweist, wobei die leitenden Streifen (4, 5) entlang ihrer Länge im wesentlichen die gleiche Breite L = L' haben und die Oberflächen der Elektroden (16, 17) gleichfalls identisch sind.

3. Elektrochemischer Sensor nach Anspruch 2, dadurch gekennzeichnet, daß jede Öffnung (12, 13) die Gestalt eines kreisförmigen Abschnitts hat und daß die die beiden Öffnungen trennende Region (14) die Gestalt eines zu den beiden leitenden Streifen (4, 5) parallelen Streifens hat.

4. Elektrochemischer Sensor nach Anspruch 1, dadurch gekennzeichnet, daß die Fenster (8, 11) durch Stanzen des Abdeckfilms (2) realisiert sind.

5. Elektrochemischer Sensor nach Anspruch 1, dadurch gekennzeichnet, daß die Arbeitselektrode (16) zudem mit einem Reagenz (18) überzogen ist, welches mindestens ein für die in der Lösung enthaltene Komponente spezifisches Enzym und einen zum Übertragen von Elektronen geeigneten chemischen Vermittler enthält.

6. Elektrochemischer Sensor nach Anspruch 5, dadurch gekennzeichnet, daß der Vermittler aus den mit Ruthenium, Osmium oder Vanadium substituierten Komplexen mono-, bis- oder tri-2,2'-Bipyridin ausgewählt wird, wobei mindestens einer der Bipyridin-Liganden durch mindestens eine Gruppe von Elektronendonatoren substituiert ist.

7. Elektrochemischer Sensor nach Anspruch 5 oder 6, dadurch gekennzeichnet, daß das Enzym Glukoseoxidase (GOD) ist, um die Dosierung von Glukose durchzuführen.

## Claims

1. Electrochemical sensor, being used to measure the concentration of a constituent in a solution, in the form of a tongue of small dimensions comprising a thin elongated insulating substrate (1) supporting on either side of its median line (3) two conductive strips (4, 5) of width L and L', whose facing edges (4a, 5a) are electrically insulated from each other by a space (6) of width δ, widths L and L' and δ being measured perpendicularly to the median line (3), said substrate (1) and said conductive strips (4, 5) being covered by a insulating covering film (2), in which are cut out at one end a connecting window (8), and close to the other end, at least one measurement window (11) formed of two openings (12, 13) separated by a portion (14) of said covering film (2), each opening delimiting on a portion of each conductive strip (4, 5) the useful surfaces of a measurement electrode (16) and of a reference electrode (17), characterized in that each opening (12, 13) has at any point dimensions, measured perpendicularly to the median line (3), such that the furthest edge (12b, 13b) from the edge (5a, 4a) of the portion of the strip (4, 5) forming the electrode (17, 16) which said opening (12, 13) does not uncover is situated at a distance comprised between L + δ and δ, respectively L' + δ and δ, and the closest edge (12a, 13a) at a distance greater than δ, such an arrangement providing a sensor necessitating no calibration.

2. Electrochemical sensor according to claim 1, characterized in that it has an axial symmetry with respect to its median line (3), the conductive strips (4, 5) having thus along their entire length substantially the same width L = L', and the useful surfaces of the electrodes (16, 17) being thus identical.

3. Electrochemical sensor according to claim 2, characterized in that each opening (12, 13) has the shape of a circular sector and that the portion (14) separating the two openings has the shape of a strip parallel to the conductive strips (4, 5).

4. Electrochemical sensor according to claim 1, characterized in that the windows (8, 11) are made by stamping the covering film (2).

5. Electrochemical sensor according to claim 1, characterized in that the measurement electrode (16) is also covered with a reactant (18) containing at least one specific enzyme of the constituent present in the solution and a chemical mediator capable of transferring the electrons.

6. Electrochemical sensor according to claim 5, characterized in that the mediator is selected amongst the mono, bis or tris 2,2' - substituted bipyridine complexes of ruthenium, osmium or vanadium, at least one of the bipyridine ligands being substituted by at least one electron donor group.

7. Electrochemical sensor according to claims 5 or 6, characterized in that the enzyme is glucose oxydase (GOD) for effecting the glucose dosage.
